# EUROPÄISCHE PATENTSCHRIFT

(11) **EP 3 814 619 B1**
(45) Veröffentlichungstag und Bekanntmachung des Hinweises auf die Patenterteilung: **22.05.2024**
(21) Anmeldenummer: 19733480.8
(22) Anmeldetag: 25.06.2019
(51) Int. Cl.: F02D 41/00, F02D 41/24, F02D 41/14, F02D 41/38, F02D 41/28

(54) **VERFAHREN ZUM ANGLEICHEN EINES EINSPRITZVERHALTENS VON INJEKTOREN EINES VERBRENNUNGSMOTORS, MOTORSTEUERGERÄT UND VERBRENNUNGSMOTOR**
METHOD FOR ADJUSTING THE INJECTION BEHAVIOR OF INJECTORS OF A COMBUSTION ENGINE, ENGINE CONTROL UNIT AND INTERNAL COMBUSTION ENGINE
PROCÉDÉ DE RÉGLAGE DU COMPORTEMENT D'INJECTION D'INJECTEURS D'UN MOTEUR À COMBUSTION, APPAREIL DE COMMANDE DE MOTEUR ET MOTEUR À COMBUSTION INTERNE

(30) Priorität: 26.06.2018 DE 102018115305
(43) Veröffentlichungstag der Anmeldung: 05.05.2021
(73) Patentinhaber: Rolls-Royce Solutions GmbH, 88045 Friedrichshafen (DE)
(72) Erfinder: FRANK, Tobias, 88048 Friedrichshafen (DE); REMELE, Jörg, 88709 Hagnau (DE); TOTH, Aron, 88048 Friedrichshafen (DE)
(74) Vertreter: Eisenführ Speiser
(86) Internationale Anmeldenummer: PCT/EP2019/066739
(87) Internationale Veröffentlichungsnummer: WO 2020/002276

(56) Entgegenhaltungen:
- EP-B1- 0 488 362
- WO-A1-2010/022834
- DE-B4-102012 020 489
- US-A- 5 176 122

## Beschreibung

Die Erfindung betrifft ein Verfahren zum Betreiben eines Verbrennungsmotors gemäß dem Oberbegriff des Anspruchs 1, ein Motorsteuergerät sowie einen Verbrennungsmotor.

Ein Verbrennungsmotor, insbesondere ein Diesel-Motor oder ein Gas-Motor, umfasst regelmäßig ein Kraftstoffsystem und eine Anzahl von Zylindern. Das Kraftstoffsystem weist typischerweise einen Kraftstoffsammelraum, eine Injektorvorrichtung mit einer Anzahl von Injektoren und eine Kraftstoffzuführung auf. Eine Kraftstoffzuführung ist derart ausgebildet, dass sie den Kraftstoffsammelraum und die Injektorvorrichtung fluidverbindet, damit Kraftstoff vom Kraftstoffsammelraum zu der Injektorvorrichtung geleitet werden kann.

Ein Kraftstoffsammelraum, auch Kraftstoffspeicher oder Hochdruckspeicher genannt, eines Diesel-Motors, speichert Kraftstoff unter Hochdruck, typischerweise zwischen 1000 und 3000 bar. Mittels einer Hochdruckpumpe wird der Kraftstoff in dem Kraftstoffsammelraum auf ein entsprechend hohes Druckniveau gebracht und gehalten. In einem Diesel-Motor ist der Kraftstoffsammelraum typischerweise ein Common-Rail oder ein Common-Rail-System.

Bei einem Gas-Motor wird Kraftstoff in einem Kraftstoffsammelraum mittels einem Gasdruckregler typischerweise unter einem Druck, der zwischen 0 und 15 bar beträgt, gespeichert. Hier kommt das Gas in der Regel mit Systemdruck aus einem Speicher oder Netz und der Kraftstoffdruck des Kraftstoffs im Kraftstoffsammelraum wird entsprechend abgeregelt.

Der Kraftstoffsammelraum ist regelmäßig über eine Kraftstoffzuführung mit einer Injektorvorrichtung fluidverbunden. In einem Diesel-Motor weist eine Injektorvorrichtung eine Anzahl von Flüssigbrennstoff-Injektoren auf und in einem Gasmotor weist die Injektorvorrichtung eine Anzahl von Gasbrennstoff-Injektoren auf. In einem Gasmotor mit multi-point-injection (MPI)-Ventilen ist eine Kraftstoffzuführung regelmäßig eine Gaszuführung zu den MPI-Ventilen.

Injektoren zur Einspritzung von Brennstoff in Zylinder eines Verbrennungsmotors weisen selbst bei identischer Ansteuerung, insbesondere bei identischer Bestromung, fertigungsbedingte Streuungen in ihrem Öffnungsverhalten auf. Das liegt daran, dass Injektoren teilweise ihr Einspritzverhalten über die Zeit ändern, da es z.B. zu einer Mengenreduktion aufgrund von Ablagerungen oder zu einer Mengenerhöhung aufgrund von Auswaschungen an der Düse kommt. Durch Ablagerungen kann sich beispielsweise die Einspritzdauer von Injektoren über die Zeit ändern, da ein hydraulischer oder mechanischer Öffnungs- bzw. Schließmechanismus der Injektoren durch Ablagerungen in seiner Funktionsweise beeinträchtigt wird. Veränderungen des Einspritzverhaltens können von Injektor zu Injektor unterschiedlich ausfallen. Unter Umständen unterscheidet sich sogar das Einspritzverhalten neueingebauter Injektoren.

Die Injektoren eines Verbrennungsmotors werden regelmäßig mit identischen Bestromungsparametern, insbesondere mit einer identischen Bestromungsdauern angesteuert. Gleichwohl werden oftmals geringfügig unterschiedliche Kraftstoffmengen in die einzelnen Zylinder eingespritzt. Bei geringen Einspritzmengen kann die Streuung dabei so groß sein, dass einige Injektoren Kraftstoff in die ihnen zugeordneten Zylinder einspritzen, während andere nicht öffnen. Daher sind bei stark streuenden Injektoren eine Voreinspritzung und eine Nacheinspritzung nicht darstellbar.

Die unterschiedliche Kraftstoffmenge in den verschiedenen Zylindern führt regelmäßig dazu, dass die Zylinder unterschiedliche Leistungen abgeben, also unterschiedlich belastet werden. Die entstehenden Drehungleichförmigkeiten können zum Beispiel zu einer erhöhten Belastung und eventuell sogar zu einer Schädigung der Kupplung und der Zylinder führen.

Durch unterschiedliche Kraftstoffmengen in den verschiedenen Zylindern können sich die Zylinder zudem stark in ihren zylinderindividuellen Abgastemperaturen unterscheiden. Dies kann zu Problemen führen, insbesondere dann, wenn kleine Gruppen von Zylindern in eine Abgasflut zusammengefasst werden, die einer Abgasnachbehandlung zugeführt wird, da für die Abgasnachbehandlung eine wohl-definierte Abgastemperatur wichtig ist. Ungleiche Einspritzmengen können weiterhin zu einem ungleichen Verbrennungsluftverhältnis in den einzelnen Zylindern führen. Emission und Verbrennungsluftverhältnis sind stark korreliert und darüber hinaus nichtlinear miteinander verknüpft, sodass ungleiche Einspritzmengen im Mittel zu erhöhten Abgasemissionen führen.

Wenn die Kraftstoffmengen in den Zylindern von Zylinder zu Zylinder unterschiedlich sind, kann es sein, dass einzelne Zylinder nicht am Abstimmungspunkt von Motordrehmoment und Last betrieben werden, wodurch der Wirkungsgrad dieser Zylinder in der Regel reduziert ist.

Es ist deshalb wünschenswert, die Streuung im Öffnungsverhalten der Injektoren und somit der Kraftstoffmenge in verschiedenen Zylindern im Betrieb des Verbrennungsmotors nach Möglichkeit zu reduzieren.

Ein Verfahren zum Angleichen eines Einspritzverhaltens von Injektoren in einem Verbrennungsmotor gemäß des Oberbegriffs des Anspruchs 1 ist bekannt aus DE 10 2012 020 489 B4. Hier ist ein Verfahren zum Angleichen eines Einspritzverhaltens von Injektoren in einem Verbrennungsmotor beschrieben, das ein Abschalten eines Injektors unter dann allerdings einem Erfassen eines Kurbelwinkelsignals des Verbrennungsmotors umfasst. Es wird dann eine Fouriertransformierte des Kurbelwinkelsignals genutzt und ein Betrag derselben zu dem abgeschalteten Injektor zugeordnet. Konkret wird der Betrag der Harmonischen der 0,5ten Ordnung der Fouriertransformierten des Kurbelwinkelsignals als Angleich-Merkmal für eine Angleichung bzw. Gleichstellung des Einspritzverhaltens herangezogen. Der abgeschaltete Injektor wird wieder eingeschaltet und die vorhergehenden Schritte werden sequentiell für alle Injektoren des Verbrennungsmotors durchgeführt. Es wird ein Mittelwert aus den gespeicherten Beträgen über alle Injektoren gebildet und eine Ansteuerung der Injektoren anhand einer Abweichung des einem zu korrigierenden Injektor zugeordneten Betrags von dem Mittelwert korrigiert.

Allerdings werden Großdiesel- oder Großgasmotoren gleicher Bauart oftmals in grundsätzlich unterschiedlichen Anlagen eingesetzt, wobei jede Anlage ihren ganz eigenen Antriebsstrang mitbringt. Mechanische Einflüsse auf die Drehbewegung der Kurbelwelle sind also in hohem Maße abhängig von der Anlage, in die der Motor eingebaut ist. So kann z.B. eine angeschlossene Kolbenpumpe, z.B. bei Fracking, zusätzliche mechanische Schwingungen, insbesondere der 0.5ten Ordnung, auf der Antriebswelle erzeugen. Eine mangelhafte Ausrichtung, z.B. durch Setzung, von Motor und Schraube in Schiffen, Lagerschäden und weitere mechanische Effekte können ebenfalls Auswirkungen auf die Drehbewegung des Motors haben. Die Gleichstellung von Zylindern auf Basis des Drehzahlsignals der Kurbelwelle wie bekannt aus DE 10 2012 020 489 B4 ist also im Wesentlichen von der Anlage in der der Verbrennungsmotor verwendet wird abhängig. Entsprechend ist nicht auszuschließen, dass ein Großteil möglicher Störeinflüsse auf eine Gleichstellung von Zylindern auf Basis des Drehzahlsignals der Kurbelwelle auf Seiten der Anlage liegt, in welcher ein Verbrennungsmotor verwendet wird.

Wünschenswert ist insofern darüber hinaus zum Angleichen eines Einspritzverhaltens von Injektoren in einem Verbrennungsmotor eine für das Kraftstoffsystem des Verbrennungsmotors an sich spezifischere Grundlage nutzen zu können.

Mittels einer Einzelspeicherdruck-(ESD-)Analyse, beispielsweise bekannt aus DE10 2009 002 793 B4 oder DE 10 2013 216 255 B3, wird eine injektorindividuelle Diagnose einer Kraftstoff-Einspritzeinrichtung ermöglicht. Bei der ESD-Analyse wird nah an jedem Injektor der zeitliche Verlauf des Kraftstoffdrucks gemessen und ausgewertet. Beispielsweise sind an einem 20-Zylinder-Motor zwanzig zusätzliche Drucksensoren verbaut, die jeweils individuell verkabelt, überwacht und ausgewertet werden. Die Auswertung dieser zwanzig zusätzlichen Signale erfolgt typischerweise nicht im Motorsteuergerät (ECU), sondern wird in einem weiteren Steuergerät mit eigener Software und eigenem Parametersatz umgesetzt. Wiederum andere Verfahren sehen eine Hochdruckindizierung des Motors vor, bei dem in jedem Brennraum Drucksensoren eingebracht werden. Die beschriebenen Lösungen benötigen somit ebenfalls zusätzliche Sensoren mit Verkabelung und typischerweise eine zusätzliche Auswerteeinheit.

In dem Artikel "Modelgestützte Fehlererkennung und Diagnose für Common-Rail-Einspritzsysteme" von R. Isermann et al. (Motortechnische Zeitschrift 2/2010, 71. Jahrgang, Seiten 114-121) wird grundsätzlich die Möglichkeit einer Fehlererkennung und Diagnose für Common-Rail-Systeme erörtert, wobei auf eine zusätzliche Sensorik weitgehend verzichtet werden soll. Es wird stattdessen eine modellbasierte Berechnung des Hochdrucks am Common-Rail unter Mittelwertbildung eines Hochdrucksignals eines bereits üblicherweise immer vorhandenen Common-Rail-Hochdrucksensors zugrunde gelegt. Konkret wird in der Offenlegungsschrift DE 10 2009 044 076 A1 darauf basierend ein Verfahren zur Erkennung von Fehlern der Kraftstoffeinspritzung einer Brennkraftmaschine beschrieben. In dem Modell wird davon ausgegangen, dass einzelne Komponenten der Brennkraftmaschine, wie beispielsweise die Hochdruckpumpe oder die einzelnen Kraftstoffinjektoren, periodische Schwankungen des in dem Hochdruckspeicher vorherrschenden Drucks erzeugen. Die Periodendauer weist jeweils ein festes Verhältnis zur Kurbelwellendrehzahl auf. Durch eine geeignete Auswahl und Vorgabe der von entsprechenden Perioden, beziehungsweise zeitlichen Intervallen abhängenden Betriebswerte können für die einzelnen Frequenzen charakteristische Fehlerquellen erkannt und identifiziert werden. Weiterhin wird beschrieben, dass Kenngrößen, wie der vom Drucksensor gemessene Druck in dem Hochdruckspeicher, mit den üblicherweise vorhandenen Sensoren erfasst werden oder von der Steuerelektronik vorgegeben werden können, so dass kein nennenswerter Aufwand für zusätzliche Sensoren oder Messwerterfassungseinrichtungen erforderlich ist.

Allerdings basiert der Ansatz von Isermann et al. doch recht stark auf der zugrundeliegenden Modellbildung. In dem Analyse-Verfahren von R. Isermann et al. wird konkret im Rahmen des Modells des Common-Rail-Systems mindestens eine Kenngröße während des Betriebs erfasst; also beispielsweise der mit dem Hochdrucksensor gemessene Druck in dem Hochdruckspeicher, der Steuerstrom eines Mengenregelventils, der Steuerstrom des Druckregelventils und die Motordrehzahl, der Kurbelwellenwinkel und das Kraftstoffeinspritzvolumen eines jeden Kraftstoffinjektors. Ausgehend von solchen Kenngrößen können geeignete Betriebswerte y(t) berechnet werden, die während des Betriebs ständig mit zugeordneten Referenzwerten verglichen werden, um einzelne Fehler zu erkennen, bzw. Fehlerursachen identifizieren zu können. Anschließend wird ein Vergleich zwischen einem aus der Kenngröße ermittelten Betriebswert und einem Referenzwert durchgeführt. Weiterhin werden mehrere Betriebswerte ermittelt und mit jeweils einem zugeordneten Referenzwert verglichen, um anschließend die Ergebnisse der einzelnen Vergleiche zwischen den Betriebswerten und den zugeordneten Referenzwerten in Beziehung zueinander zu setzen und zwischen verschiedenen Fehlern zu unterscheiden und einen Fehler zu identifizieren. Bei einem Vergleich zwischen einem Betriebswert und einem zugeordneten Referenzwert wird ein Residuum als Differenz zwischen Betriebswert und Referenzwert berechnet. Mindestens ein Betriebswert und ein zugeordneter Referenzwert werden in Abhängigkeit von zeitlichen Intervallen ermittelt, die ein vorgebbares Verhältnis zu einer Kurbelwellendrehzahl der Brennkraftmaschine aufweisen. Die Referenzwerte werden tabellarisch abgespeichert oder in Polynomkoeffizienten umgewandelt.

Es ist nun eine Aufgabe der Erfindung ein verbessertes Verfahren zum Angleichen eines Einspritzverhaltens von Injektoren in einem Verbrennungsmotor bereitzustellen, insbesondere unter Verbesserung einer der oben genannten Aspekte. Es soll die Streuung im Öffnungsverhalten der Injektoren und somit der Kraftstoffmenge in verschiedenen Zylindern im Betrieb des Verbrennungsmotors nach Möglichkeit reduziert werden. Es soll zum Angleichen eines Einspritzverhaltens von Injektoren in einem Verbrennungsmotor eine für das Kraftstoffsystem des Verbrennungsmotors an sich spezifischere Grundlage genutzt werden können. Insbesondere soll das Verfahren sicher und effizient eine Injektorgleichstellung ermöglichen, sodass eine Serienstreuung ausgeglichen werden kann. Dabei soll das Verfahren bevorzugt einfach und kostengünstig sowie insbesondere im laufenden Betrieb des Verbrennungsmotors durchführbar sein.

Aufgabe der Erfindung ist es auch, ein Motorsteuergerät zu schaffen, mithilfe dessen das Verfahren durchführbar ist. Weiterhin ist es Aufgabe der Erfindung, einen Verbrennungsmotor mit einem System zu schaffen, mit dem ein Einspritzverhalten von Injektoren in dem Verbrennungsmotor angleichbar ist.

Hinsichtlich des Verfahrens wird die Aufgabe erfindungsgemäß durch ein Verfahren gemäß dem Anspruch 1 gelöst.

Das erfindungsgemäße Verfahren geht aus von einem eingangs genannten Verfahren zum Betreiben eines Verbrennungsmotors. Der Verbrennungsmotor umfasst ein Kraftstoffsystem und eine Anzahl von Zylindern. Das Kraftstoffsystem weist einen Kraftstoffsammelraum, eine Injektorvorrichtung mit einer Anzahl von Injektoren und eine Kraftstoffzuführung auf. Die Kraftstoffzuführung verbindet den Kraftstoffsammelraum und die Injektorvorrichtung derart, dass Kraftstoff vom Kraftstoffsammelraum zu der Injektorvorrichtung geleitet werden kann.

Der Verbrennungsmotor kann z.B. ein Flüssigbrennstoff-Motor oder ein Gas-Motor sein. Durch ein Angleichen des Einspritzverhaltens von Injektoren wird vorzugsweise eine Gleichstellung der Zylinder des Verbrennungsmotors bewirkt. Der Kraftstoffsammelspeicher kann, im Fall eines Flüssigbrennstoff-Motors, zum Beispiel ein Kraftstoffhochdruckspeicher sein in dem Kraftstoff der durch eine Hochdruckpumpe in den Kraftstoffsammelspeicher gepumpt wird, auf einem hohen Druckniveau, vorzugsweise zwischen 1000 und 3000 bar gespeichert werden. Bei einem Gas-Motor kann Kraftstoff in dem Kraftstoffsammelraum mittels einem Gasdruckregler typischerweise unter einem Druck, der zwischen 0 und 15 bar beträgt, gespeichert und in der Regel lediglich abgeregelt werden.

Im Falle eines Flüssigbrennstoff-Motors sind die Injektoren der Injektorvorrichtung bevorzugt Flüssigbrennstoff-Injektoren und im Falle eines Gas-Motors sind die Injektoren der Injektorvorrichtung bevorzugt Gasbrennstoff-Injektoren, insbesondere Gasbrennstoffventile.

Das erfindungsgemäße Verfahren geht somit aus von einem Ansatz gemäß dem Oberbegriff des Anspruchs 1, und weist zum Angleichen eines Einspritzverhaltens der Injektoren die folgenden Schritte auf:
- Abschalten eines Injektors aus der Anzahl von Injektoren;
- Erfassen eines dem abgeschalteten Injektor zuzuordnenden Signals des Verbrennungsmotors;
- Ermitteln eines Angleich-Merkmals aus dem Signal und Zuordnen des Angleich-Merkmals zu dem abgeschalteten Injektor als ein dem Injektor zugeordnetes Angleich-Merkmal;
- Einschalten des zuvor abgeschalteten Injektors;
- Durchführen der genannten vorhergehenden Schritte sequentiell für die weiteren Injektoren der Anzahl von Injektoren.

Die Erfindung geht von der Überlegung aus, dass für die Gleichstellung der Zylinder von Verbrennungsmotoren zwar grundsätzlich Verfahren verwendet werden könnten, welche unter anderem eine Einzelspeicherdruck-(ESD-)Analyse umfassen. Bei einem entsprechenden Verfahren ist jedoch eine erhebliche Anzahl von zusätzlichen Sensoren notwendig und eine Auswertung der Sensorsignale entsprechend rechenaufwendig. Insofern hat die Erfindung zunächst erkannt, dass es vorteilhaft ist, für die Gleichstellung der Zylinder eines Verbrennungsmotors einen allgemeineren Kraftstoffdruck zu erfassen, da zunächst ein Kraftstoffdrucksignal, anders als das Drehzahlsignal der Kurbelwelle, im Wesentlichen unabhängig von der Anlage ist, in dem ein Verbrennungsmotor verwendet wird und außerdem jedoch mit einer Kraftstoffdrucksensor-Anordnung an einem Kraftstoffsammelraum und/oder der Kraftstoffzuführung ein komplexe Sensorik für jeden Injektor oder Zylinder weitgehend vermieden werden kann. Die Nutzung des gemessenen Kraftstoffdrucksignals vermeidet auch eine zu komplexe rechenaufwendige Analytik.

Die Erfindung geht weiterhin von der Überlegung aus, dass der Kraftstoffdruck genutzt werden kann, um Informationen über das Einspritzverhalten von Injektoren erhalten und genutzt werden kann, um regelnd und korrigierend in das Einspritzverhalten von Injektoren eines Verbrennungsmotors einzugreifen. Insbesondere sollte dies auch bei Großdieselmotoren mit einem großen Kraftstoffsystem und einer vergleichsweise großen Anzahl von Injektoren möglich sein. Eine Gleichstellung von Zylindern sollte entsprechend auch bei großen und vergleichsweise komplexen Verbrennungsmotoren ermöglicht werden.

Zur Lösung der Aufgabe in Bezug auf das Verfahren ist erfindungsgemäß vorgesehen, dass das Erfassen des Signals ein Erfassen eines transienten Kraftstoffdrucks des Verbrennungsmotors umfasst. Der transiente Kraftstoffdruck wird mit einer Kraftstoffdrucksensor-Anordnung an dem Kraftstoffsammelraum und/oder der Kraftstoffzuführung erfasst. Es ist weiterhin erfindungsgemäß vorgesehen, dass das Ermitteln des Angleich-Merkmals ein Ermitteln einer Maßzahl umfasst. Die Maßzahl wird dem abgeschalteten Injektor der Anzahl von Injektoren zugeordnet und mittels eines transienten Algorithmus am transienten Kraftstoffdruck ermittelt. Erfindungsgemäß ist weiterhin vorgesehen, dass eine Ansteuerung eines zu korrigierenden Injektors korrigiert wird, wobei die dem zu korrigierenden Injektor zugeordnete Maßzahl verwendet wird.

Der Erfindung liegt die Erkenntnis zugrunde, dass mittels der Messung eines Kraftstoffdrucks mit einem Kraftstoffdrucksensor an einer für alle Injektoren relevanten Stelle, nämlich dem Kraftstoffsammelraum und/oder der Kraftstoffzuführung, alle notwendigen Informationen erfasst werden können. Dies ist ein Ansatz zum Angleichen eines Einspritzverhaltens der Injektoren, der vergleichsweise wenig Sensorik erforderlich macht und gleichzeitig eine recheneffiziente Analyse ermöglicht.

Der Erfindung liegt weiter die Erkenntnis zugrunde, dass eine Maßzahl, die dem abgeschalteten Injektor der Anzahl von Injektoren zugeordnet wird mittels eines transienten Algorithmus recheneffizient ermittelt werden kann. Vorzugsweise wird die Erfindung verwendet bei einem Verfahren zum Betreiben des Verbrennungsmotors in Echtzeit, jedenfalls während des Betriebs des Verbrennungsmotors.

Ein Vorteil der Erfindung liegt darin, dass bei den Berechnungen auf vorteilhafte transiente Algorithmen zurückgegriffen wird, die jedenfalls nur teilweise -und dann recheneffizient-- eine diskrete Fourier-Transformation nutzen, anstatt einer vollen Fourier-Transformation. Der transiente Algorithmus kann beispielsweise eine diskrete Fourier-Transformation für einen Zeitabschnitt sein. Insbesondere der Goertzel-Algorithmus kann genutzt werden, um eine Fourier-Transformation effizient für wenige Spektralkomponenten zu berechnen. Eine Maßzahl ist entsprechend das Ergebnis einer diskreten Fourier-Transformation, die auf den erfassten Kraftstoffdruck angewendet wird.

Bevorzugt wird für jeden Injektor der Anzahl der Injektoren nacheinander eine Maßzahl ermittelt. Das heißt, nachdem für einen Injektor eine Maßzahl ermittelt wurde, wird dieser wieder eingeschaltet und ein nächster Injektor wird abgeschaltet. Für den nächsten Injektor wird dann entsprechend eine diesem Injektor zugeordnete Maßzahl ermittelt. Bevorzugt wird für jeden Injektor der Anzahl der Injektoren genau eine Maßzahl ermittelt. Denkbar ist aber auch, dass für einen Injektor mehrere Maßzahlen ermittelt werden über die dann beispielsweise gemittelt werden kann. Das Verfahren wird bevorzugt in bestimmten Zeitabständen wiederholt, sodass in bestimmten Zeitabständen ein neuer Satz an injektorzugeordneten Maßzahlen ermittelt wird.

Denkbar ist auch, dass mehr als ein Injektor aus der Anzahl der Injektoren gleichzeitig abgeschaltet wird. Ein erfasstes Signal und eine daraus ermittelte Maßzahl kann dann der Gruppe von abgeschalteten Injektoren zugeordnet werden.

Bereits mit diesem Konzept ist es möglich eine Ansteuerung eines zu korrigierenden Injektors zu korrigieren, indem die dem zu korrigierenden Injektor zugeordneten Maßzahl verwendet wird. Insbesondere wird die Maßzahl erfasst, gespeichert und ausgewertet.

Hinsichtlich des Motorsteuergeräts wird die Aufgabe durch ein Motorsteuergerät gemäß dem Anspruch 14 gelöst, das zum Angleichen eines Einspritzverhaltens zur Durchführung des beschriebenen Verfahrens eingerichtet ist.

Hinsichtlich des Verbrennungsmotors wird die Aufgabe durch einen Verbrennungsmotor gemäß dem Anspruch 15 mit einem System zum Angleichen eines Einspritzverhaltens von Injektoren in dem Verbrennungsmotor gelöst, wobei das System zur Durchführung des Verfahrens gemäß dem Konzept der Erfindung ausgebildet ist. Das System weist einen Schalter auf, der zum selektiven Ab- und Einschalten eines Injektors ausgebildet ist. Weiterhin weist das System ein Monitormodul auf, das zum Erfassen eines von einem Kraftstoffsensor gemessenen transienten Kraftstoffdrucks des Verbrennungsmotors. Weiterhin weist das System ein Rechnermodul auf, das zum Ermitteln einer Maßzahl mittels eines transienten Algorithmus aus dem erfassten transienten Kraftstoffdruck und zum Zuordnen dieser Maßzahl zu dem abgeschalteten Injektor ausgebildet ist. Außerdem weist das System einen Kraftstoffeinsteller auf, der zum Korrigieren einer Ansteuerung eines zu korrigierenden Injektors unter Verwendung der dem zu korrigierenden Injektor zugeordneten Maßzahl ausgebildet ist.

Weiterbildungen der Erfindung sind den Unteransprüchen zu entnehmen und geben im einzelnen vorteilhafte Möglichkeiten an, dass oben erläuterte Konzept im Rahmen der Aufgabenstellung, sowie hinsichtlich weiterer Vorteile zu realisieren.

Vorzugsweise wird das Verfahren derart wiederholt, dass nach dem Ermitteln von injektorzugeordneten Maßzahlen eine Korrektur der Bestromungsdauer von Injektoren durchgeführt wird, um das Einspritzverhalten der Injektoren aneinander anzugleichen. Danach werden erneut injektorzugeordnete Maßzahlen ermittelt und anschließend eine Korrektur der Bestromungsdauer von Injektoren durchgeführt. Die Schritte des Ermittelns von injektorzugeordneten Maßzahlen und einer daran anschließenden Korrektur der Bestromungsdauer der Injektoren werden bevorzugt solange wiederholt, bis durch das Verfahren iterativ eine Bestromungsdauer erreicht wird, die innerhalb eines vorgegebenen Fehlerintervalls oder unterhalb eines Schwellenwertes liegt.

Bevorzugt wird die Ansteuerung der Injektoren so korrigiert, dass die Gesamtleistung des Verbrennungsmotors hierdurch nicht verändert wird.

Vorteilhafterweise kann der Kraftstoffdruck auch ohne zusätzliche Sensorik, Verkabelung oder Auswerteeinheit erfasst werden.

Bevorzugt wird die Ansteuerung der Injektoren korrigiert, indem eine Bestromungsdauer für die Injektoren angepasst wird. Die Bestromungsdauer ist typischerweise die Injektionszeit. Es kann aber auch vorteilhaft sein eine Injektionsfrequenz, z.B. bei einer Mehrfachinjektion, anzupassen. Das Verfahren kann die folgenden weiteren Schritte aufweisen:
- Identifizieren des zu korrigierenden Injektors aufgrund der dem Injektor zugeordneten Maßzahl, und/oder
- Korrigieren einer Ansteuerung indem eine Bestromung des zu korrigierenden Injektors korrigiert wird, wobei die dem zu korrigierenden Injektor zugeordneten Maßzahl verwendet wird.

In einer bevorzugten Weiterbildung ist der Verbrennungsmotor ein Flüssigbrennstoff-Motor und umfasst der Kraftstoffsammelraum ein Common-Rail. In dem Common-Rail ist Flüssigbrennstoff unter Hochdruck gespeichert. Der Kraftstoffdrucksensor misst den Kraftstoffdruck des in dem Common-Rail gespeicherten Kraftstoffs.

In einer weiteren bevorzugten Weiterbildung ist der Verbrennungsmotor ein Gas-Motor und umfasst die Kraftstoffzuführung eine Sammelgaszuführung. Der Kraftstoffdrucksensor misst den Gasdruck des in der Sammelgaszuführung gespeicherten Gasbrennstoffs.

In einer Weiterbildung umfasst die Kraftstoffdrucksensor-Anordnung zum Messen des transienten Kraftstoffdrucks zum Ermitteln der Maßzahl einen Sammel-Hochdrucksensor, welcher auch zur Kraftstoffinjektion verwendet wird. Insbesondere weist die Kraftstoffdrucksensor-Anordnung den Sammel-Hochdrucksensor als einzigen Drucksensor auf. Bei einem Common-Rail ist der Sammel-Hochdrucksensor typischerweise der Raildrucksensor.

Bevorzugt wird der Kraftstoffdruck von der Kraftstoffdrucksensor-Anordnung über wenigstens ein Arbeitsspiel eines Zylinders des Verbrennungsmotors erfasst.

In einer bevorzugten Weiterbildung umfasst die Kraftstoffdrucksensor-Anordnung zum Messen des transienten Kraftstoffdrucks zum Ermitteln der Maßzahl einen Kraftstoffdrucksensor, welcher einer Gruppe von Zylindern zugeordnet ist. Die Gruppe von Zylindern bildet eine Teilmenge aller Zylinder. Der Kraftstoffdrucksensor ist bevorzugt auf einer der Gruppe zugeordneten Stelle des Common-Rails angeordnet. Insbesondere ist der ein weiterer Kraftstoffdrucksensor, zusätzlich zum Sammel-Hochdrucksensor.

In einer bevorzugten Weiterbildung ist die Teilmenge von Zylindern durch die Zylinder der A-Seite oder die Zylinder der B-Seite des Verbrennungsmotors gebildet. Der Kraftstoffdrucksensor ist bevorzugt auf einer der A-Seite zugeordneten Seite des Common-Rails oder einer der B-Seite zugeordnete Seite des Common-Rails angeordnet. Vorteilhafterweise kann in einer solchen Ausführungsform ein Sammel-Hochdrucksensor entfallen.

Vorteilhafterweise kann jeweils ein Kraftstoffdrucksensor der A-Seite und ein weiterer Kraftstoffdrucksensor der B-Seite zugeordnet sein. Beispielsweise ist in einer Variante ein

Kraftstoffdrucksensor an der A-Seite angeordnet und dieser zugeordnet und ein weiterer Kraftstoffdrucksensor an der B-Seite angeordnet und dieser zugeordnet. In einer weiteren Variante ist ein Kraftstoffdrucksensor an der A-Seite angeordnet und B-Seite zugeordnet sein und ein weiterer Kraftstoffdrucksensor an der B-Seite angeordnet und der A-Seite zugeordnet sein. Insbesondere in den beiden beschriebenen Varianten kann ein Sammel-Hochdrucksensor entfallen.

Die jeweils an der A-Seite und an der B-Seite angeordneten Kraftstoffdrucksensoren messen jeweils einen Kraftstoffdruck. Aus den erfassten Kraftstoffdrücken kann dann beispielsweise ein Mittelwert gebildet werden und aus dem Mittelwert kann dann eine Maßzahl ermittelt werden. In einer Variante messen der Kraftstoffdrucksensor auf der A-Seite und der weitere Kraftstoffdrucksensor auf der B-Seite zeitlich abwechselnd einen Kraftstoffdruck. Aus den abwechselnd erfassten Kraftstoffdrücken kann dann beispielsweise jeweils direkt eine Maßzahl ermittelt werden oder aus den abwechselnd erfassten Kraftstoffdrücken kann ein Mittelwert gebildet werden und aus dem Mittelwert kann dann eine Maßzahl ermittelt werden.

In einer Variante werden die Maßzahlen aller Zylinder zunächst nur mit dem Kraftstoffdrucksensor auf der A-Seite ermittelt und danach die Maßzahlen aller Zylinder nur mit dem weiteren Kraftstoffdrucksensor auf der B-Seite.

In einer Weiterbildung umfasst die Kraftstoffdruck-Anordnung einen Sammel-Hochdrucksensor und wenigstens einen weiteren Kraftstoffdrucksensor. Der wenigstens eine Kraftstoffdrucksensor ist bevorzugt einer Gruppe von Zylindern zugeordnet. Insbesondere ist der wenigstens eine Kraftstoffdrucksensor den Zylindern auf einer A-Seite oder den Zylindern auf einer B-Seite eines Common-Rails oder eines Common-Rail-Systems zugeordnet. Aus den von dem Sammel-Hochdrucksensor und dem wenigstens einen weiteren Kraftstoffdrucksensor erfassten Kraftstoffdrücken kann wiederum ein Mittelwert gebildet werden und aus diesem dann eine Maßzahl ermittelt werden.

In einer Weiterbildung umfasst die Kraftstoffdruck-Anordnung einen Sammel-Hochdrucksensor und mehrere weitere Kraftstoffdrucksensoren. In einer Variante messen jeder der Sensoren nacheinander einen Kraftstoffdruck. Aus jedem der nacheinander erfassten Kraftstoffdrücken kann jeweils direkt eine Maßzahl ermittelt werden oder aus jedem der nacheinander erfassten Kraftstoffdrücke kann ein Mittelwert gebildet werden und aus dem gebildeten Mittelwert kann dann eine Maßzahl ermittelt werden.

In einer Variante werden die Maßzahlen aller Zylinder nacheinander individuell für jeden Zylinder zunächst nur mit einem ersten der Sensoren ermittelt. Anschließend werden die Maßzahlen aller Zylinder nur mit einem zweiten der Sensoren ermittelt. Dieses Verfahren wird solange wiederholt, bis jeder der Sensor der Anzahl von Sensoren wenigstens einmal die Maßzahlen aller Zylinder ermittelt hat.

In einer bevorzugten Weiterbildung wird zum Korrigieren einer Ansteuerung eines zu korrigierenden Injektors die dem zu korrigierenden Injektor zugeordnete Maßzahl verwendet oder eine von der Maßzahl abgeleitete Größe verwendet.

Die Maßzahl bildet eine Ungleichheit einer in verschiedene Zylinder des Verbrennungsmotors eingebrachten Kraftstoffmenge ab. Die Maßzahl wird vorteilhafterweise zur Gleichstellung der Kraftstoffmenge in den verschiedenen Zylindern verwendet.

Bevorzugt wird ein Mittelwert aus den erfassten, den einzelnen Injektoren oder einer Gruppe von Injektoren zugeordneten Maßzahlen gebildet. Die Ansteuerung eines zu korrigierenden Injektors kann dann vorteilhafterweise anhand einer Abweichung der dem zu korrigierenden Injektor zugeordneten Maßzahl von dem aus den Maßzahlen gebildeten zugehörigen Mittelwert korrigiert werden.

In einer Weiterbildung wird ein transienter Kraftstoffdruck erfasst, wenn alle Injektoren eingeschaltet sind. Aus diesem transienten Kraftstoffdruck wird dann eine allen Injektoren zugeordnete Maßzahl ermittelt. Weiterhin kann ein Differenzbetrag aus der Differenz der einem Injektor zugeordneten Maßzahl zu der allen Injektoren zugeordneten Maßzahl berechnet werden.

Bevorzugt wird aus allen, den einzelnen Injektoren zugeordneten Differenzbeträgen, ein Mittelwert gebildet. Die Ansteuerung eines zu korrigierenden Injektors wird anhand einer Abweichung des dem zu korrigierenden Injektor zugeordneten Differenzbetrags von dem aus allen Differenzbeträgen gebildeten Mittelwert korrigiert.

Bevorzugt wird eine Korrektur der Ansteuerung eines Injektors nur durchgeführt, wenn die Abweichung von dem Mittelwert einen vorherbestimmten Schwellenwert überschreitet.

In einer Weiterbildung werden mindestens zwei Iterationen des Verfahrens durchgeführt, wobei das Verfahren sooft nacheinander für die Injektoren des Verbrennungsmotors wiederholt wird, bis die Abweichung für jeden zu korrigierenden Injektor den vorherbestimmten Schwellenwert unterschreitet. Die Anzahl der Iterationen kann auch dadurch begrenzt sein, dass das Verfahren nach einer vorgegebenen Anzahl an Iterationen abgebrochen wird. Dies ist insbesondere dann vorteilhaft, wenn der vorherbestimmte Schwellenwert, beispielsweise aufgrund eines Fehlers, nicht erreicht werden kann. Es wird also vorteilhafterweise ein weiteres Abbruchkriterium angegeben, wodurch die Anzahl der Iterationen begrenzt wird. Die Anzahl der erlaubten Iterationen kann beispielsweise durch die Betriebsdauer eines Motors bestimmt sein.

Bevorzugt wird der erfasste transiente Kraftstoffdruck winkelsynchron und/oder zeitsynchron erfasst. Wenn der transiente Kraftstoffdruck zeitsynchron erfasst wird, muss jedoch in der Regel die Information über die Dauer eines Arbeitsspiels ebenfalls erfasst werden. Das liegt daran, dass in dem Verfahren aus den Abtastwerten des Signals innerhalb eines definierten Vielfachen der Dauer eines Arbeitsspiels (z.B. der Abtastwerte eines einzelnen Arbeitsspiels) berechnet werden muss.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1: einen Verbrennungsmotor mit einem Kraftstoffsystem und einer Anzahl von Zylindern,
Fig. 2: eine bevorzugte Ausführungsform eines Verfahrens zum Angleichen eines Einspritzverhaltens von Injektoren eines Verbrennungsmotors,
Fig. 3: ein Schema zum Ermitteln einer mittels eines transienten Algorithmus am transienten Kraftstoffdruck;
Fig. 4: verschiedene Möglichkeiten von Sensoranordnungen an einem Kraftstoffsammelraum,
Fig. 5: eine bevorzugte Ausführungsform einer Kraftstoffzuführung eines Gasmotors mit multi-point-injection- (MPI-)Ventilen,

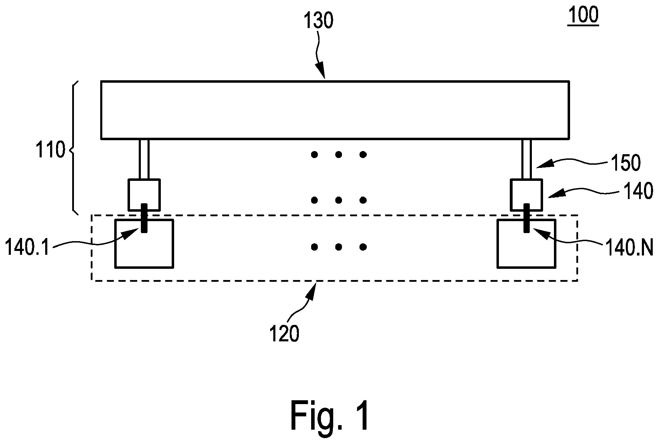

In Fig. 1 ist ein Verbrennungsmotor 100, insbesondere ein Flüssigbrennstoffmotor oder ein Gasmotor, mit einem Kraftstoffsystem 110 und einer Anzahl von Zylindern 120 gezeigt. Das Kraftstoffsystem 110 weist einen Kraftstoffsammelraum 130 auf, in dem Kraftstoff, z.B. entsprechend Flüssigbrennstoff oder Gasbrennstoff, unter Hochdruck gespeichert wird. Im Falle eines Flüssigbrennstoffmotors ist ein Kraftstoffsammelraum typischerweise ein Common-Rail in dem Kraftstoff mittels einer Hochdruckpumpe auf einem hohen Druckniveau, typischerweise zwischen 1000 und 3000 bar, gehalten wird.

Das Kraftstoffsystem 110 weist weiterhin eine Injektorvorrichtung 140 mit einer Anzahl von Injektoren 140.1 bis 140.N auf. Die Injektoren der Injektorvorrichtung können z.B. Flüssigbrennstoff-Injektoren oder Gasbrennstoff-Injektoren sein. Die Injektoren 140.1 bis 140.N der Injektorvorrichtung 140 sind dafür vorgesehen, den in dem einen Kraftstoffsammelraum 130 gespeicherten Kraftstoff in die Zylinder 120, insbesondere in den Brennraum der Zylinder, des Verbrennungsmotors 100 einzuspritzen. Bevorzugt wird in alle Zylinder die gleiche Kraftstoffmenge eingespritzt, sodass alle Zylinder im Betrieb des Verbrennungsmotors gleich belastet werden. In der gezeigten Ausführungsform ist jeweils ein Injektor genau einem Zylinder zugeordnet. In einer hier nicht gezeigten Ausführungsform können aber auch mehrere Injektoren einer Anzahl von Injektoren jeweils einem Zylinder zugeordnet sein.

Das Kraftstoffsystem 110 weist weiterhin eine Kraftstoffzuführung 150 auf. Die Kraftstoffzuführung 150 verbindet den Kraftstoffsammelraum 130 und die Injektorvorrichtung 140 derart, dass Kraftstoff von dem Kraftstoffsammelraum 130 zu der Injektorvorrichtung 140, insbesondere zu der Anzahl von Injektoren 140.1 bis 140.N geleitet werden kann. In einer hier nicht gezeigten Ausführungsform ist eine Kraftstoffzuführung eine Hochdruckleitung, die Kraftstoff von einem Common-Rail zu einem Injektor einer Injektorvorrichtung leitet.

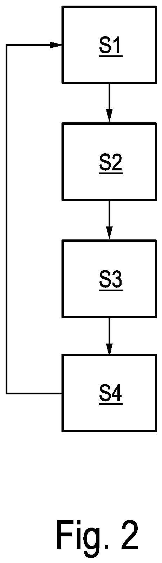

Fig. 2 zeigt anhand eines Ablauf-Diagramms eine bevorzugte Ausführungsform eines Verfahrens zum Angleichen eines Einspritzverhaltens von Injektoren eines Verbrennungsmotors.

In einem ersten Schritt S1 wird ein einzelner Injektor aus der Anzahl von Injektoren 140.1 bis 140.N abgeschaltet; es könnte zwar grundsätzlich auch eine Gruppe von Injektoren abgeschaltet werden - dies hätte jedoch zur Folge, dass ein dann erfasstes Signal und ein zu ermittelndes Angleich-Merkmal bzw. Maßzahl für diese Gruppe maßgeblich ist und weniger für einen einzelnen Injektor wie in diesem Ausführungsbeispiel. Gleichwohl kann auch das erläuterte Vorgehen unter analoger Anwendung auf eine Gruppe von Injektoren angemessen sein.

In einem nächsten Schritt S2 wird ein dem abgeschalteten Injektor zuzuordnendes Signal des Verbrennungsmotors erfasst. In einem darauffolgenden Schritt S3 wird ein Angleich-Merkmal aus dem Signal ermittelt. Dieses Angleich-Merkmal wird dem abgeschalteten Injektor als ein dem Injektor zugeordnetes Angleich-Merkmal zugeordnet. Nachdem ein dem abgeschalteten Injektor zugeordnetes Angleich-Merkmal erfasst wurde wird in einem nächsten Schritt S4 der zuvor abgeschaltete Injektor wieder eingeschaltet. Wenigstens die Schritte S1 bis S4 werden sequentiell für die weiteren Injektoren, bevorzugt für alle Injektoren der Anzahl von Injektoren 140.1 bis 140.N durchgeführt, sodass für jeden der Injektoren eine wenigstens einem der Injektoren zugeordnete Maßzahl ermittelt wird.

Bei dem Erfassen des Signals wird ein transienter Kraftstoffdruck eines Verbrennungsmotors erfasst. Der transiente Kraftstoffdruck wird bevorzugt mit einem Kraftstoffdrucksensor, z.B. einem Raildrucksensor, an einem Kraftstoffsammelraum, z.B. einem Common-Rail, und/oder einer Kraftstoffzuführung eines Kraftstoffsystems eines Verbrennungsmotors erfasst. Vorteilhafterweise ist keine zusätzliche Sensorik notwendig um den Kraftstoffdruck zu erfassen, sondern der Kraftstoffdruck kann mit einem ohnehin vorgesehenen Sammel-Hochdrucksensor gemessen werden. In verschiedenen hier nicht gezeigten Ausführungsformen können auch eine Anzahl weiterer Kraftstoffdrucksensoren zusätzlich oder alternativ zu dem ohnehin vorgesehenen Sammel-Hochdrucksensor vorgesehen sein um den Kraftstoffdruck zu erfassen zum Zwecke des Angleichens eines Einspritzverhaltens von Injektoren. D.h. der dem Verfahren zum Zwecke des Angleichens eines Einspritzverhaltens von Injektoren zugeführte Kraftstoffdruck kann von dem Sammel-Hochdrucksensor oder einem weiteren Kraftstoffdrucksensor oder von beiden gemessen werden.

Das Ermitteln eines Angleich-Merkmals umfasst ein Ermitteln einer Maßzahl, die vorzugsweise erfasst, gespeichert und ausgewertet wird. Die Maßzahl wird dem abgeschalteten Injektor der Anzahl von Injektoren zugeordnet und bevorzugt mittels eines transienten Algorithmus am transienten Kraftstoffdruck ermittelt. Der transiente Algorithmus ist bevorzugt der an sich bekannte Goertzel-Algorithmus mit dem recheneffizient eine diskrete Fourier Transformation für einzelne diskrete Spektralanteile des transienten Kraftstoffdrucks berechnet werden kann.

Eine allgemeine Beschreibung des Goertzel-Algorithmus findet sich beispielsweise unter https://de.wikipedia.org/wiki/Goertzel-Algorithmus und konkret in dem eingangs genannten Artikel von Isermann et al. bzw. Oppenheim, A.; Schafer, R.: Zeitdiskrete Signalverarbeitung. R.-Oldenbourg-Verlag, München, 1992 und dem Buch von Isermann, R.: Fault Diagnosis Systems. Springer-Verlag, Berlin, 2006, deren Inhalt hiermit durch Zitat in die vorliegende Anmeldung aufgenommen ist zur Beschreibung der Anwendung des Goertzel-Algorithmus auf das transiente Kraftstoffdrucksignal an dem Kraftstoffsammelraum und/oder der Kraftstoffzuführung wie dem Common-Rail oder Sammelgaszuführung zum Ermitteln der Maßzahl.

Zum Korrigieren einer Ansteuerung eines zu korrigierenden Injektors wird dann die dem zu korrigierenden Injektor zugeordneten Maßzahl verwendet.

In einer hier nicht gezeigten Ausführungsform wird anhand der ermittelten Angleich-Merkmale, insbesondere anhand eines einem Injektor zugeordneten Angleich-Merkmals, ein zu korrigierender Injektor identifiziert. Bevorzugt wird dann die Ansteuerung, insbesondere die Bestromung, des zu korrigierenden Injektors korrigiert. Beispielsweise kann aus den ermittelten Angleich-Merkmalen ein Mittelwert gebildet werden und für jedes der einem Injektor zugeordneten Angleich-Merkmale eine Abweichung von dem Mittelwert bestimmt werden. Falls die Abweichung eines Angleich-Merkmals von dem Mittelwert für einen der Injektoren einen vorherbestimmten Schellenwert überschreitet, kann die Ansteuerung dieses Injektors derart verändert werden, dass die Abweichung in Bezug auf den Mittelwert minimiert wird.

Es ist auch möglich ein Angleich-Merkmal zu ermitteln, wenn alle Injektoren eingeschaltet sind. Ein entsprechendes Angleich-Merkmal ist dann allen Injektoren zugeordnet.

Für jeden Injektor kann dann durch Durchführung der Schritte S1 bis S4 ein einem Injektor zugeordnetes Angleich-Merkmal bestimmt werden. Für jeden der Injektoren kann dann ein einem Injektor zugeordneter Differenzbetrag aus der Differenz des einem Injektor zugeordneten Angleich-Merkmals von dem allen Injektoren zugeordneten Angleich-Merkmal ermittelt werden. Aus der Anzahl der jeweils einem der Injektoren zugeordneten Angleich-Merkmale kann dann ein Mittelwert gebildet werden. Aus der Abweichung eines einem der Injektoren zugeordneten Differenzbetrags von diesem Mittelwert kann dann eine Abweichung bestimmt werden. Falls die Abweichung eines Differenzbetrags von diesem Mittelwert für einen der Injektoren einen vorherbestimmten Schellenwert überschreitet, kann die Ansteuerung dieses Injektors derart verändert werden, dass die Abweichung in Bezug auf den Mittelwert minimiert wird.

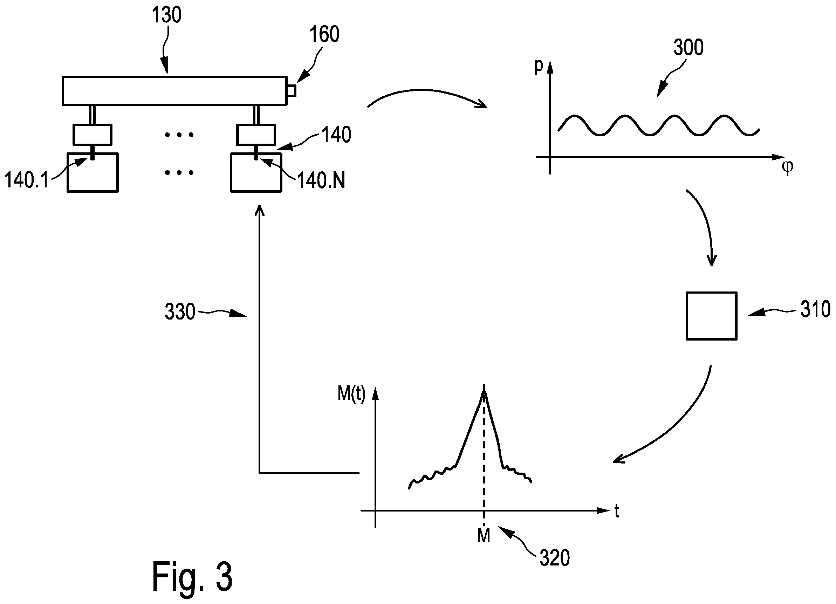

Fig. 3 zeigt ein Schema zum Ermitteln einer Maßzahl, wobei die Maßzahl dem abgeschalteten Injektor der Anzahl von Injektoren zugeordnet wird und mittels eines transienten Algorithmus am transienten Kraftstoffdruck ermittelt wird. Zunächst wird ein Injektor der Anzahl von Injektoren 140.1 bis 140.N einer Injektorvorrichtung 140 abgeschaltet. Dadurch kann sich z.B. die Amplitude eines periodischen Druckschwingungsanteils bei einer bestimmten Frequenz im Kraftstoffdruck verändern. An dem Kraftstoffsammelraum 130 wird mit einem Kraftstoffdrucksensor 160 ein transienter Kraftstoffdruck winkelsynchron erfasst 300. Alternativ kann der transiente Kraftstoffdruck auch zeitsynchron erfasst werden. Bevorzugt wird dann eine Maßzahl direkt aus dem erfassten transienten Kraftstoffdruck mittels eines transienten Algorithmus 310, insbesondere mittels des Goertzel-Algorithmus, ermittelt. Mit anderen Worten wird eine einem Injektor zugeordnete Maßzahl bevorzugt mittels einer diskreten Fourier-Transformation ermittelt, welche lediglich für einzelne diskrete Spektralbereiche berechnet wird.

Das Ergebnis der diskreten Fourier-Transformation ist eine Maßzahl 320, die symbolisch als Auswertung einer "Funktion" im unteren Teil der Fig.3 dargestellt ist. Die Maßzahl M kann z.B. die Amplitude eines periodischen Druckschwingungsanteils des Common-Rail-Drucks bei einer bestimmten Frequenz sein. Diese ermittelte Maßzahl M wird dann im Schritt 330 dem abgeschalteten Injektor zugeordnet.

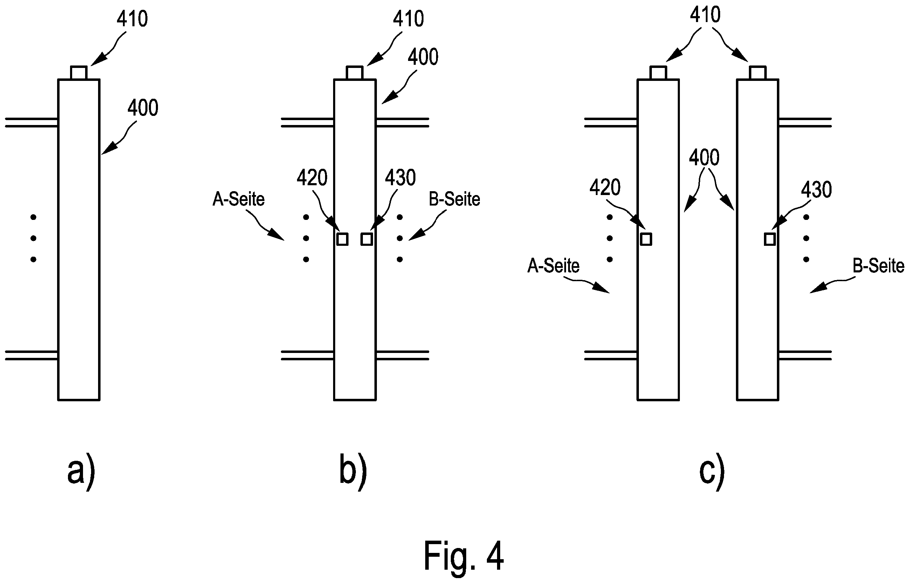

Fig. 4 zeigt verschiedene Möglichkeiten von Sensoranordnungen an einem Kraftstoffsammelraum. In a) und b) der Fig.4 ist jeweils ein Common-Rail und in c) der Fig.4 ist ein Common-Rail-System mit zwei rohrförmigen Hochdruckspeichern gezeigt. An dem in a) der Fig.4 gezeigten Common-Rail 400 ist ein Sammel-Hochdrucksensor 410 angebracht, der den Kraftstoffdruck für die Regelung der Kraftstoffinjektion misst. Der von diesem einen Sammel-Hochdrucksensor 410 gemessene Kraftstoffdruck kann winkelsynchron oder zeitsynchron erfasst werden und mittels eines transienten Algorithmus kann aus diesem erfassten transienten Kraftstoffdruck eine Maßzahl ermittelt werden.

In b) der Fig.4 ist ein Common-Rail 400 gezeigt an dem ein Sammel-Hochdrucksensor 410 angebracht ist. An dem Common-Rail sind außerdem zwei weitere Kraftstoffdrucksensoren 420 und 430 angebracht. Jeder der drei Sensoren misst einen Kraftstoffdruck. Wenigstens einer der Kraftstoffdrücke kann winkelsynchron oder zeitsynchron erfasst werden um aus dem transienten Kraftstoffdruck eine Maßzahl zu ermitteln. In der hier gezeigten Ausführungsform ist der Kraftstoffdrucksensor 420 an der A-Seite angeordnet und den Injektoren auf der A-Seite zugeordnet. Das heißt, dass eine Maßzahl, die einem Injektor auf der A-Seite zugeordnet ist, aus einem Kraftstoffdruck ermittelt wurde, die von dem an der A-Seite angebrachten Kraftstoffdrucksensor 420 gemessen wurde. Der Kraftstoffdrucksensor 430 ist an der B-Seite angeordnet und den Injektoren auf der B-Seite zugeordnet. Das heißt, dass eine Maßzahl, die einem Injektor auf der B-Seite zugeordnet ist, aus einem Kraftstoffdruck ermittelt wurde, die von dem an der B-Seite angebrachten Kraftstoffdrucksensor 430 gemessen wurde.

In einer hier nicht gezeigten Ausführungsform sind lediglich die Sensoren 420 und 430 am Common-Rail 400 angeordnet, sodass der Sammel-Hochdrucksensor 410 in dieser Ausführungsform entfällt.

In einer hier nicht gezeigten Ausführungsform ist der Kraftstoffdrucksensor 420 an der A-Seite angeordnet aber den Injektoren auf der B-Seite zugeordnet. Das heißt, dass eine Maßzahl, die einem Injektor auf der B-Seite zugeordnet ist, aus einem Kraftstoffdruck ermittelt wurde, die von dem an der A-Seite angebrachten Kraftstoffdrucksensor 420 gemessen wurde. In dieser Ausführungsform ist der Kraftstoffdrucksensor 430 an der B-Seite angeordnet aber den Injektoren auf der A-Seite zugeordnet. Das heißt, dass eine Maßzahl, die einem Injektor auf der A-Seite zugeordnet ist, aus einem Kraftstoffdruck ermittelt wurde, die von dem an der B-Seite angebrachten Kraftstoffdrucksensor 430 gemessen wurde.

Denkbar ist auch, dass mehrere Sensoren, z.B. der Sammel-Hochdrucksensor 410 und die beiden Kraftstoffdrucksensoren 420 und 430, jeweils einen Kraftstoffdruck messen und die gemessenen Kraftstoffdrücke gemittelt werden. Aus dem gemittelten Kraftstoffdruck kann dann eine Maßzahl ermittelt werden. Die in Bezug auf b) genannten Ausführungsformen lassen sich auch auf ein wie in c) gezeigtes Common-Rail-System übertragen. Das in c) gezeigte Common-Rail-System weist zwei Common-Rails 400 auf, wobei das eine Common-Rail der A-Seite und das andere Common-Rail der B-Seite zugeordnet ist. In der gezeigten Ausführungsform weist jedes der Common-Rails einen eigenen Sammel-Hochdrucksensor auf. Insbesondere bei einem Common-Rail-System bietet sich an, eine Maßzahl für einen Injektor der A-Seite aus einem Kraftstoffdruck zu ermitteln, der von dem Kraftstoffdrucksensor auf der A-Seite 420 und/oder dem der A-Seite zugeordneten Sammel-Hochdrucksensor gemessen wurde und eine Maßzahl für einen Injektor der B-Seite aus einem Kraftstoffdruck zu ermitteln, der von dem Kraftstoffdrucksensor auf der B-Seite 430 und/oder dem der B-Seite zugeordneten Sammel-Hochdrucksensor gemessen wurde.

In einer hier nicht gezeigten Ausführungsform sind lediglich die Sensoren 420 und 430 am Common-Rail-System angeordnet, sodass die Sammel-Hochdrucksensoren 410 an den Common-Rails 400 in dieser Ausführungsform entfallen.

In einer hier nicht gezeigten Ausführungsform ist der Kraftstoffdrucksensor 420 an der A-Seite angeordnet aber den Injektoren auf der B-Seite zugeordnet. Das heißt, dass eine Maßzahl, die einem Injektor auf der B-Seite zugeordnet ist, aus einem Kraftstoffdruck ermittelt wurde, die von dem an der A-Seite angebrachten Kraftstoffdrucksensor 420 gemessen wurde. In dieser Ausführungsform ist der Kraftstoffdrucksensor 430 an der B-Seite angeordnet aber den Injektoren auf der A-Seite zugeordnet. Das heißt, dass eine Maßzahl, die einem Injektor auf der A-Seite zugeordnet ist, aus einem Kraftstoffdruck ermittelt wurde, die von dem an der B-Seite angebrachten Kraftstoffdrucksensor 430 gemessen wurde.

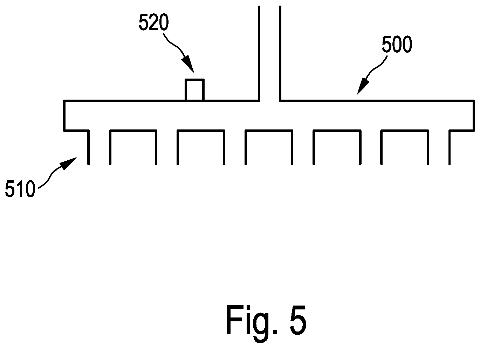

Fig. 5 zeigt eine bevorzugte Ausfuhrungsform einer Kraftstoffzuführung 500 eines Gasmotors mit multi-point-injection- (MPI-)Ventilen 510. Die gezeigte Kraftstoffzuführung ist insbesondere eine Gaszuführung zu den MPI-Ventilen 510. Vorteilhafterweise wird der Kraftstoffdruck des Gasbrennstoffs mit einem Kraftstoffdrucksensor 520 gemessen, der an der Gaszuführung 500 zu den MPI-Ventilen 510 angebracht ist.

### BEZUGSZEICHENLISTE

- 100: Verbrennungsmotor
- 110: Kraftstoffsystem
- 120: Anzahl von Zylindern
- 130: Kraftstoffsammelraum
- 140: Injektorvorrichtung
- 140.1 bis 140.N: Anzahl von Injektoren
- 150: Kraftstoffzuführung
- 160: Kraftstoffdrucksensor
- 300: Winkelsynchrones Erfassen eines transienten Kraftstoffdrucks
- 310: Ermitteln einer Maßzahl
- 320: Maßzahl
- 330: Zuordnen der Maßzahl zu einem abgeschalteten Injektor
- 400: Common-Rail
- 410: Sammel-Hochdrucksensor
- 420, 430: Kraftstoffdrucksensoren
- 500: Kraftstoffzuführung eines Gas-Motors
- 510: multi-point-injection- (MPI-)Ventile
- 520: Kraftstoffdrucksensor
- S1: Abschalten eines Injektors
- S2: Erfassen eines dem abgeschalteten Injektor zuzuordnendes Signal des Verbrennungsmotors
- S3: Ermitteln eines Angleich-Merkmals aus dem Signal
- S4: Einschalten des zuvor abgeschalteten Injektors

## Patentansprüche

1. Verfahren zum Angleichen eines Einspritzverhaltens von Injektoren eines Verbrennungsmotors (100), wobei der Verbrennungsmotor (100) umfasst:
ein Kraftstoffsystem (110) und eine Anzahl von Zylindern (120), wobei das Kraftstoffsystem (110) aufweist: einen Kraftstoffsammelraum (130), eine Injektorvorrichtung (140) mit einer Anzahl von Injektoren (140.1 ... 140.N) und eine Kraftstoffzuführung (150), die den Kraftstoffsammelraum (130) und die Injektorvorrichtung (140) derart fluidverbindet, dass Kraftstoff vom Kraftstoffsammelraum (130) zu der Injektorvorrichtung (140) geleitet werden kann, wobei das Verfahren zum Angleichen des Einspritzverhaltens der Injektoren die Schritte aufweist:
- Abschalten (S1) eines Injektors aus der Anzahl von Injektoren(140.1 ... 140.N);
- Erfassen (S2) eines dem abgeschalteten Injektor zuzuordnenden Signals des Verbrennungsmotors;
- Ermitteln (S3) eines Angleich-Merkmals aus dem Signal und Zuordnen des Angleich-Merkmals zu dem abgeschalteten Injektor als ein dem Injektor zugeordnetes Angleich-Merkmal;
- Einschalten (S4) des zuvor abgeschalteten Injektors (S4);
- Durchführen der genannten vorhergehenden Schritte sequentiell für die weiteren Injektoren der Anzahl von Injektoren (140.1 ... 140.N);
**dadurch gekennzeichnet, dass**:
- das Erfassen (S2) des Signals ein Erfassen eines transienten Kraftstoffdrucks des Verbrennungsmotors (100) umfasst, wobei der transiente Kraftstoffdruck mit einer Kraftstoffdrucksensor-Anordnung an dem Kraftstoffsammelraum (130) und/oder der Kraftstoffzuführung (150) erfasst wird;
- das Ermitteln (S3) des Angleich-Merkmals ein Ermitteln (310) einer Maßzahl (320) umfasst, wobei die Maßzahl (320) dem abgeschalteten Injektor der Anzahl von Injektoren (140.1 ... 140.N) zugeordnet wird und mittels eines transienten Algorithmus am transienten Kraftstoffdruck ermittelt wird, wobei die Maßzahl (320) eine Ungleichheit einer in verschiedene Zylinder des Verbrennungsmotors eingebrachten Kraftstoffmenge abbildet und zur Gleichstellung der Kraftstoffmenge in den verschiedenen Zylindern (120) verwendet wird, und
- eine Ansteuerung eines zu korrigierenden Injektors korrigiert wird, wobei die dem zu korrigierenden Injektor zugeordnete Maßzahl (320) verwendet wird.

2. Verfahren nach Anspruch 1, aufweisend die Schritte:
- Identifizieren des zu korrigierenden Injektors aufgrund der dem Injektor zugeordneten Maßzahl, und
- Korrigieren einer Ansteuerung indem eine Bestromung, des zu korrigierenden Injektors korrigiert wird, wobei die dem zu korrigierenden Injektor zugeordneten Maßzahl verwendet wird, wobei
- zum Korrigieren einer Ansteuerung eines zu korrigierenden Injektors die dem zu korrigierenden Injektor zugeordneten Maßzahl (320) direkt verwendet wird oder eine von der Maßzahl (320) abgeleitete Größe verwendet wird.

3. Verfahren nach einem der Ansprüche Anspruch 1 oder 2, wobei
- der Verbrennungsmotor (100) ein Flüssigbrennstoff-Motor ist und der Kraftstoffsammelraum (130) ein Common-Rail (400) ist, in dem Flüssigbrennstoff unter Hochdruck gespeichert ist und der Kraftstoffdrucksensor (160) den Kraftstoffdruck des in dem Common-Rail (400) gespeicherten Kraftstoffs misst, oder
- der Verbrennungsmotor (100) ein Gas-Motor ist und die Kraftstoffzuführung (150) eine Sammelgaszuführung ist und der Kraftstoffdrucksensor (160) den Gasdruck des in der Sammelgaszuführung gespeicherten Gasbrennstoffs misst.

4. Verfahren nach einem der vorhergehenden Ansprüche, wobei die Kraftstoffdrucksensor-Anordnung zum Messen des transienten Kraftstoffdrucks zum Ermitteln der Maßzahl (320) ein Sammel-Hochdrucksensor (410) umfasst, insbesondere den Sammel-Hochdrucksensor (410) als einzigen Drucksensor aufweist, welcher auch zur Kraftstoffinjektion verwendet wird.

5. Verfahren nach einem der vorhergehenden Ansprüche, wobei die Kraftstoffdrucksensor-Anordnung zum Messen des transienten Kraftstoffdrucks zum Ermitteln der Maßzahl (320) einen Kraftstoffdrucksensor (420, 430) umfasst, insbesondere einen weiteren Kraftstoffdrucksensor zusätzlich zum Sammel-Hochdrucksensor (410), welcher einer Gruppe von Zylindern zugeordnet ist, die eine Teilmenge aller Zylinder bildet, wobei der Kraftstoffdrucksensor (420, 430) auf einer der Gruppe zugeordneten Stelle des Common-Rails (400) angeordnet ist.

6. Verfahren nach Anspruch 5, wobei die Teilmenge von Zylindern durch die Zylinder der A-Seite oder die Zylinder der B-Seite des Verbrennungsmotors (100) gebildet ist, wobei der Kraftstoffdrucksensor (420, 430) auf einer der A-Seite zugeordneten Seite des Common-Rails (400) oder einer der B-Seite zugeordnete Seite des Common-Rails (400) angeordnet ist.

7. Verfahren nach Anspruch 1, wobei die Kraftstoffdrucksensor-Anordnung einen Sammel-Hochdrucksensor (410) und wenigstens einen weiteren Kraftstoffdrucksensor (420, 430) umfasst, wobei der wenigstens einen Kraftstoffdrucksensor (420, 430) einer Gruppe von Zylindern zugeordnet ist, insbesondere den Zylindern auf einer A-Seite oder den Zylindern auf einer B-Seite eines Common-Rails (400) oder eines Common-Rail-Systems.

8. Verfahren nach wenigstens einem der vorherigen Ansprüche, **dadurch gekennzeichnet, dass** die Maßzahl (320) eine Amplitude eines periodischen Druckschwingungsanteils bei einer bestimmten Frequenz im Kraftstoffdruck ist, insbesondere des Common-Rail-Drucks ist.

9. Verfahren nach wenigstens einem der vorherigen Ansprüche, wobei ein Mittelwert aus den erfassten, den einzelnen Injektoren zugeordneten Maßzahlen gebildet wird und die Ansteuerung eines zu korrigierenden Injektors anhand einer Abweichung der dem zu korrigierenden Injektor zugeordneten Maßzahl von dem aus den Maßzahlen gebildeten Mittelwert korrigiert wird.

10. Verfahren nach wenigstens einem der vorherigen Ansprüche, wobei ein transienter Kraftstoffdruck erfasst wird, wenn alle Injektoren eingeschaltet sind, und aus diesem transienten Kraftstoffdruck eine allen Injektoren zugeordnete Maßzahl ermittelt wird, und weiterhin ein Differenzbetrag aus der Differenz der einem Injektor zugeordneten Maßzahl zu der allen Injektoren zugeordneten Maßzahl berechnet wird.

11. Verfahren nach Anspruch 10, wobei aus allen, den einzelnen Injektoren zugeordneten Differenzbeträgen, ein Mittelwert gebildet wird, und die Ansteuerung eines zu korrigierenden Injektors anhand einer Abweichung der dem zu korrigierenden Injektor zugeordneten Differenzbetrag von dem aus allen Differenzbeträgen gebildeten Mittelwert korrigiert wird.

12. Verfahren nach wenigstens einem der vorherigen Ansprüche, **dadurch gekennzeichnet, dass**
- eine Korrektur der Ansteuerung eines Injektors nur durchgeführt wird, wenn die Abweichung von dem Mittelwert einen vorherbestimmten Schwellenwert überschreitet, und/oder.
- mindestens zwei Iterationen des Verfahrens durchgeführt werden, wobei das Verfahren sooft nacheinander für die Injektoren des Verbrennungsmotors wiederholt wird, bis die Abweichung für jeden zu korrigierenden Injektor den vorherbestimmten Schwellenwert unterschreitet.

13. Verfahren nach wenigstens einem der vorherigen Ansprüche, **dadurch gekennzeichnet, dass** der transient erfasste Kraftstoffdruck winkelsynchron und/oder zeitsynchron erfasst wird (300).

14. Motorsteuergerät zum Betreiben eines Verbrennungsmotors, **dadurch gekennzeichnet, dass** das Motorsteuergerät zum Angleichen eines Einspritzverhaltens von Injektoren zur Durchführung eines Verfahrens nach einem der Ansprüche 1 bis 13 eingerichtet ist.

15. Verbrennungsmotor (100) mit einem System zur Durchführung eines Verfahrens nach einem der Ansprüche 1 bis 13, wobei der Verbrennungsmotor (100) umfasst:
ein Kraftstoffsystem (110) und eine Anzahl von Zylindern (120), wobei das Kraftstoffsystem (110) aufweist: einen Kraftstoffsammelraum (130), eine Injektorvorrichtung (140) mit einer Anzahl von Injektoren (140.1 ... 140.N) und eine Kraftstoffzuführung (150), die den Kraftstoffsammelraum (130) und die Injektorvorrichtung (140) derart fluidverbindet, dass Kraftstoff vom Kraftstoffsammelraum zu der Injektorvorrichtung geleitet werden kann, wobei das System zur Angleichung eines Einspritzverhaltens der Injektoren (140.1 ... 140.N) aufweist:
- einen Schalter, ausgebildet zum selektiven Ab- und Einschalten eines Injektors;
- ein Monitormodul, ausgebildet zum Erfassen eines von einem Kraftstoffsensor gemessenen transienten Kraftstoffdrucks des Verbrennungsmotors (100);
- ein Rechnermodul, ausgebildet zum Ermitteln einer Maßzahl mittels eines transienten Algorithmus aus dem erfassten transienten Kraftstoffdruck und zum Zuordnen dieser Maßzahl zu dem abgeschalteten Injektor, wobei die Maßzahl (320) eine Ungleichheit einer in verschiedene Zylinder des Verbrennungsmotors eingebrachten Kraftstoffmenge abbildet und zur Gleichstellung der Kraftstoffmenge in den verschiedenen Zylindern (120) verwendet wird; und
- einen Kraftstoffeinsteller, ausgebildet zum Korrigieren einer Ansteuerung eines zu korrigierenden Injektors unter Verwendung der dem zu korrigierenden Injektor zugeordneten Maßzahl.

## Claims

1. Method for adjusting an injection behaviour of injectors of a combustion engine (100), wherein the combustion engine (100) comprises:
a fuel system (110) and a number of cylinders (120), wherein the fuel system (110) includes: a fuel collecting chamber (130), an injector device (140) with a number of injectors (140.1 ... 140.N) and a fuel feed (150) fluidly connecting the fuel collecting chamber (130) and the injector device (140) so that fuel can be directed from the fuel collecting chamber (130) to the injector device (140), wherein the method for adjusting the injection behavior of the injectors comprises the steps:
- switching off (S1) one injector out of the number of injectors (140.1 ... 140.N);
- detecting (S2) a signal of the combustion engine to be assigned to the switched off injector;
- determining (S3) an adjustment characteristic from the signal and assigning the adjustment characteristic to the switched-off injector as an adjustment characteristic assigned to the injector;
- switching on (S4) the previously switched off injector (S4);
- carrying out the above preceding steps in sequence for the further injectors out of the number of injectors (140.1 ... 140.N);
**characterized in that**:
- detecting (S2) the signal comprises detecting a transient fuel pressure of the combustion engine (100), wherein the transient fuel pressure is detected with a fuel pressure sensor arrangement at the fuel collecting chamber (130) and/or the fuel supply (150);
- determining (S3) the equalisation feature comprises determining (310) a measured value (320), wherein the measured value (320) is assigned to the switched-off injector out of the number of injectors (140.1 ... 140.N) and is determined by means of a transient algorithm at the transient fuel pressure, wherein the measured value (320) represents an inequality in an amount of fuel introduced into different cylinders of the combustion engine and is used to equalize the amount of fuel in the different cylinders (120), and
- an actuator of an injector to be corrected is corrected, wherein the measured value (320) assigned to the injector to be corrected is used.

2. Method according to claim 1, comprising the steps:
- identifying the injector to be corrected based on the measured value associated with the injector, and
- correcting a actuation by correcting a current flow of the injector to be corrected, using the measured value associated with the injector to be corrected, wherein
- for correcting a actuation of an injector to be corrected, the measured value (320) assigned to the injector to be corrected is used directly or a variable derived from the measured value (320) is used.

3. Method according to any one of claims 1 to 2, wherein
- the combustion engine (100) is a liquid fuel engine and the fuel collecting chamber (130) is a common rail (400) in which liquid fuel is stored under high pressure and the fuel pressure sensor (160) measures the fuel pressure of the fuel stored in the common rail (400), or
- the combustion engine (100) is a gas engine and the fuel supply (150) is a collective gas supply and the fuel pressure sensor (160) measures the gas pressure of the gas fuel stored in the collective gas supply.

4. Method according to any one of the preceding claims, wherein the fuel pressure sensor arrangement for measuring the transient fuel pressure to determine the measured value (320) comprises a collective high pressure sensor (410), in particular the collective high pressure sensor (410) as the only pressure sensor which is also used for fuel injection.

5. Method according to any one of the preceding claims, wherein the fuel pressure sensor arrangement for measuring the transient fuel pressure to determine the measured value (320) comprises a fuel pressure sensor (420, 430), in particular a further fuel pressure sensor in addition to the collective high pressure sensor (410), which is associated with a group of cylinders forming a subset of all cylinders, wherein the fuel pressure sensor (420, 430) is arranged in a location of the common rail (400) associated with the group.

6. Method according to claim 5, wherein the subset of cylinders is formed by the cylinders of the A-side or the cylinders of the B-side of the combustion engine (100), wherein the fuel pressure sensor (420, 430) is arranged on a side of the common rail (400) associated with the A-side or a side of the common rail (400) associated with the B-side.

7. Method according to claim 1, wherein the fuel pressure sensor arrangement comprises a collective high pressure sensor (410) and at least one further fuel pressure sensor (420, 430), wherein the at least one fuel pressure sensor (420, 430) is associated with a group of cylinders, in particular the cylinders on an A-side or the cylinders on a B-side of a common rail (400) or a common rail system.

8. Method according to at least one of the preceding claims, **characterized in that** the measured value (320) is an amplitude of a periodic pressure oscillation component at a certain frequency in the fuel pressure, in particular of the common rail pressure.

9. Method according to at least one of the preceding claims, wherein an average value is formed from the detected measured values assigned to the individual injectors and the actuation of an injector to be corrected is corrected on the basis of a deviation of the measured value assigned to the injector to be corrected from the average value formed from the measured values.

10. Method according to at least one of the preceding claims, wherein a transient fuel pressure is detected when all injectors are switched on, and a measured value assigned to all injectors is determined from this transient fuel pressure, and furthermore a differential amount is calculated from the difference between the measured value assigned to one injector and the measured value assigned to all injectors.

11. Method according to claim 10, wherein an average value is formed from all the differential amounts assigned to the individual injectors, and the actuation of an injector to be corrected is corrected on the basis of a deviation of the differential amount assigned to the injector to be corrected from the average value formed from all the differential amounts.

12. Method according to at least one of the preceding claims, **characterized in that**:
- a correction of the actuation of an injector is only carried out if the deviation from the mean value exceeds a predetermined threshold value, and/or
- at least two iterations of the method are carried out, wherein the method is repeated successively for the injectors of the combustion engine until the deviation for each injector to be corrected falls below the predetermined threshold value.

13. Method according to at least one of the preceding claims, **characterized in that** the transiently detected fuel pressure is detected (300) in an angle-synchronous and/or time-synchronous manner.

14. Engine control unit for operating a combustion engine, **characterized in that** the engine control unit is set up for adjusting an injection behavior of injectors for carrying out a method according to any one of claims 1 to 13.

15. Internal combustion engine (100) comprising a system for carrying out a method according to any one of claims 1 to 13, wherein the combustion engine (100) comprises:
a fuel system (110) and a number of cylinders (120), wherein the fuel system (110) includes: a fuel collecting chamber (130), an injector device (140) with a number of injectors (140.1 ... 140.N) and a fuel feed (150) fluidly connecting the fuel collecting chamber (130) and the injector device (140) so that fuel can be directed from the fuel collecting chamber (130) to the injector device (140), wherein the method for adjusting the injection behavior of the injectors (140.1 ... 140.N) comprises:
- a switch, configured to selectively switch an injector off and on;
- a monitor module, configured to detect a transient fuel pressure of the combustion engine (100) measured by a fuel sensor;
- a computer module, configured to determine a measured value by means of a transient algorithm from the detected transient fuel pressure and to assign this measured value to the switched-off injector, wherein the measured value (320) represents an inequality of an amount of fuel introduced into different cylinders of the combustion engine and is used to equalize the amount of fuel in the different cylinders (120); and,
- a fuel adjuster, configured to correct an actuation of an injector to be corrected using the measured value associated with the injector to be corrected.

## Revendications

1. Procédé d'égalisation d'un comportement d'injection des injecteurs d'un moteur à combustion interne (100), le moteur à combustion interne (100) comprenant:
un système de carburant (110) et un certain nombre de cylindres (120), dans lequel le système de carburant (110) comprend: un espace de collecte de carburant (130), un dispositif d'injection (140) avec un certain nombre d'injecteurs (140.1 à 140.N) et une alimentation en carburant (150) qui relie fluidiquement l'espace de collecte de carburant (130) et le dispositif d'injection (140) de telle sorte que le carburant puisse être dirigé depuis l'espace de collecte de carburant (130) vers le dispositif d'injection (140), le procédé d'égalisation d'un comportement d'injection des injecteurs comprenant les étapes consistant à
- éteindre (S 1) un injecteur parmi le nombre d'injecteurs (140,1 ... 140.N);
- détecter (S2) un signal du moteur à combustion interne à affecter à l'injecteur éteint;
- déterminer (S3) une caractéristique d'égalisation à partir du signal et attribuer la caractéristique d'égalisation à l'injecteur éteint en tant que caractéristique d'égalisation attribuée à l'injecteur;
- allumer (S4) l'injecteur (S4) préalablement éteint;
- réaliser séquentiellement les étapes précédentes précitées pour les injecteurs supplémentaires parmi le nombre d'injecteurs (140,1... 140.N);
**caractérisé en ce que**:
- la détection (S2) du signal comprend la détection d'une pression transitoire de carburant du moteur à combustion interne (100), la pression transitoire de carburant étant détectée à l'aide d'un agencement de capteur de pression de carburant sur l'espace de collecte de carburant (130) et/ou l'alimentation en carburant ( 150);
- la détermination (S3) de la caractéristique d'égalisation comprend la détermination (310) d'une mesure (320), la mesure (320) étant attribuée à l'injecteur éteint parmi le nombre d'injecteurs (140.1...140.N) et est fournie à l'aide d'un algorithme transitoire à partir de la pression transitoire de carburant détectée, la mesure (320) représentant une inégalité de la quantité de carburant introduite dans les différents cylindres du moteur à combustion interne et étant utilisée pour égaliser la quantité de carburant dans les différents cylindres (120),
- et
- on corrige une commande d'un injecteur à corriger, la mesure (320) affectée à l'injecteur à corriger étant utilisée.

2. Procédé selon la revendication 1, comprenant les étapes consistant à:
identifier l'injecteur à corriger en fonction de la mesure attribuée à l'injecteur, et
corriger une commande en corrigeant l'alimentation en courant de l'injecteur à corriger, à l'aide de la mesure affectée à l'injecteur à corriger, dans lequel
pour corriger une commande d'un injecteur à corriger, on utilise directement la mesure (320) affectée à l'injecteur à corriger ou on utilise une variable dérivée de la mesure (320).

3. Procédé selon l'une quelconque des revendications 1 ou 2, dans lequel
le moteur à combustion interne (100) est un moteur à carburant liquide et la chambre de collecte de carburant (130) est une rampe commune (400) dans laquelle le carburant liquide est stocké sous haute pression et le capteur de pression de carburant (160) mesure la pression du carburant dans la rampe commune (400) de carburant stocké, ou
le moteur à combustion interne (100) est un moteur à gaz et l'alimentation en carburant (150) est une alimentation en gaz collective et le capteur de pression de carburant (160) mesure la pression du gaz combustible stocké dans l'alimentation en gaz collective.

4. Procédé selon l'une quelconque des revendications précédentes, dans lequel l'agencement de capteur de pression de carburant pour mesurer la pression transitoire de carburant pour déterminer la mesure (320) comprend un capteur de haute pression collectif (410), ayant en particulier le capteur de haute pression collectif (410) comme capteur de pression unique, également utilisé pour l'injection de carburant.

5. Procédé selon l'une quelconque des revendications précédentes, dans lequel l'agencement de capteur de pression de carburant pour mesurer la pression transitoire de carburant pour déterminer la mesure (320) comprend un capteur de pression de carburant (420, 430), en particulier un autre capteur de pression de carburant en plus du capteur collectif haute pression (410), qui est associé à un groupe de cylindres qui forme un sous-ensemble de tous les cylindres, le capteur de pression de carburant (420, 430) est disposé à un emplacement sur la rampe commune (400) attribué au groupe.

6. Procédé selon la revendication 5, dans lequel le sous-ensemble de cylindres est formé par les cylindres côté A ou les cylindres côté B du moteur à combustion interne (100), le capteur de pression de carburant (420, 430) étant d'un côté attribué au côté A du rail commun (400) ou à un côté du rail commun (400) attribué au côté B.

7. Procédé selon la revendication 1, dans lequel l'agencement de capteur de pression de carburant comprend un capteur haute pression collectif (410) et au moins un autre capteur de pression de carburant (420, 430), le au moins un capteur de pression de carburant (420, 430) étant affecté à un groupe de cylindres, notamment les cylindres d'un côté A ou les cylindres d'un côté B d'une rampe commune (400) ou d'un système à rampe commune.

8. Procédé selon l'une au moins des revendications précédentes, **caractérisé en ce que** la mesure (320) est une amplitude d'une composante périodique d'oscillation de pression à une certaine fréquence de la pression du carburant, notamment la pression de la rampe commune.

9. Procédé selon au moins l'une des revendications précédentes, dans lequel une valeur moyenne est formée à partir des mesures enregistrées attribuées aux injecteurs individuels et la commande d'un injecteur à corriger est corrigée en fonction d'un écart de la mesure attribuée aux injecteurs individuels à corriger à partir de la valeur moyenne formée à partir des mesures.

10. Procédé selon au moins l'une des revendications précédentes, dans lequel une pression transitoire de carburant est détectée lorsque tous les injecteurs sont allumés, et à partir de cette pression transitoire de carburant, une mesure attribuée à tous les injecteurs est déterminée, et en outre une différence par rapport à la différence entre la mesure attribuée à un injecteur et le nombre attribué à tous les injecteurs est calculé.

11. Procédé selon la revendication 10, dans lequel une valeur moyenne est formée à partir de toutes les quantités de différence attribuées aux injecteurs individuels, et la commande d'un injecteur à corriger est corrigée sur la base d'un écart de la quantité de différence attribuée à l'injecteur à corriger par rapport à la valeur moyenne formée à partir de toutes les quantités de différence.

12. Procédé selon l'une au moins des revendications précédentes, **caractérisé en ce que**:
- une correction de la commande d'un injecteur n'est effectuée que si l'écart par rapport à la moyenne dépasse une valeur seuil prédéterminée, et/ou.
- au moins deux itérations du procédé sont effectuées, le procédé étant répété l'une après l'autre pour les injecteurs du moteur à combustion interne jusqu'à ce que l'écart pour chaque injecteur à corriger descende en dessous de la valeur seuil prédéterminée.

13. Procédé selon au moins l'une des revendications précédentes, **caractérisé en ce que** la pression de carburant détectée de manière transitoire est détectée de manière synchrone angulaire et/ou synchrone temporelle (300).

14. Unité de commande de moteur pour faire fonctionner un moteur à combustion interne, **caractérisée en ce que** l'unité de commande de moteur est configurée pour égaliser un comportement d'injection des injecteurs pour mettre en oeuvre un procédé selon l'une des revendications 1 à 13.

15. Moteur à combustion interne (100) avec un système pour mettre en oeuvre un procédé selon l'une des revendications 1 à 13, dans lequel le moteur à combustion interne (100) comprend:
un système de carburant (110) et un certain nombre de cylindres (120), le système de carburant (110) comportant : un espace de collecte de carburant (130), un dispositif d'injection (140) avec un certain nombre d'injecteurs (140.1...140.N ) et une alimentation en carburant (150), qui relie fluidiquement l'espace de collecte de carburant (130) et le dispositif d'injection (140) de telle manière que le carburant puisse être dirigé de l'espace de collecte de carburant vers le dispositif d'injection, le système d'égalisation d'un comportement d'injection des injecteurs (140.1...140.N) ayant:
- un interrupteur destiné à éteindre et rallumer sélectivement un injecteur;
- un module de surveillance, conçu pour détecter une pression transitoire de carburant du moteur à combustion interne (100) mesurée par un capteur de carburant;
- un module informatique, conçu pour déterminer une mesure à l'aide d'un algorithme transitoire à partir de la pression transitoire de carburant détectée et pour affecter cette mesure à l'injecteur éteint, la mesure (320) représentant une inégalité de quantité de carburant introduite dans les différents cylindres du moteur à combustion interne étant utilisé pour égaliser la quantité de carburant dans les différents cylindres (120); et
- un régulateur de carburant, conçu pour corriger une commande d'un injecteur à corriger à l'aide de la mesure attribuée à l'injecteur à corriger.
